# EUROPÄISCHE PATENTSCHRIFT

(11) **EP 0 960 898 B1**
(45) Veröffentlichungstag und Bekanntmachung des Hinweises auf die Patenterteilung: **22.12.2004**
(21) Anmeldenummer: 99109738.7
(22) Anmeldetag: 18.05.1999
(51) Int. Cl.: C08J 3/03, C09D 183/14

(54) **Suspensionen, ein Verfahren zu deren Herstellung und deren Verwendung**
Suspensions, process for their preparation and their use
Suspensions, procédé de préparation et leur emploi

(30) Priorität: 29.05.1998 DE 19824187
(43) Veröffentlichungstag der Anmeldung: 01.12.1999
(73) Patentinhaber: Bayer MaterialScience AG, 51368 Leverkusen (DE)
(72) Erfinder: Kirchmeyer, Stephan Dr., 51375 Leverkusen (DE); Mechtel, Markus Dr., 50937 Köln (DE); Mager, Michael Dr., 51375 Leverkusen (DE)

(56) Entgegenhaltungen:
- EP-A- 0 787 734
- EP-A- 0 825 004
- US-A- 5 378 790
- US-A- 5 677 410

## Beschreibung

Die vorliegende Erfindung betrifft neuartige Suspensionen, deren Herstellung und Verwendung.

Die Anforderungen an moderne Lackbindemittel umfassen hohe Härte bei gleichzeitig hoher Elastizität, hohe Witterungs- und chemische Beständigkeit sowie eine möglich geringe Emission von flüchtigen organischen Substanzen während Applikation und Aushärtung. Organische Bindemittel auf wäßriger Basis sind inzwischen hoch entwickelt, Lacksysteme auf der Basis von Acrylat, Polyester und Polyurethan werden bei der Lackierung von Holz, z.B. in der Möbellackierung sowie Metallen und Kunststoffen, z.B. in der Automobil-, Schienenfahrzeug-, Schiffs- und Industrielackierung genutzt. Wäßrige Bindemittel auf der Basis von Polyorganosiliconen sind ebenfalls bekannt. Bedingt durch ihren chemischen Aufbau besitzen insbesondere mit Methylgruppen substituierte Silicone eine herausragende Witterungsbeständigkeit und Wasserabweisung. Insbesondere ihre Wasserabweisung macht sie zu leistungsfähigen Bestandteilen von Anstrichfarben z.B. im Außenbereich von Gebäuden.

Als Beschichtungsmittel sind auch multifunktionelle Carbosilane, wie in DE-A 19 71 16 50 und DE-A 19 60 32 41 beschrieben, geeignet. Sie kombinieren die Härte und Elastizität von hochwertigen organischen Lackbindemitteln mit der hohen Witterungsbeständigkeit und geringen Vergilbungsneigung von Methylsiliconen. Die Verarbeitung von multifunktionellen Carbosilanen ist jedoch mit Schwierigkeiten behaftet. So waren sie als Bindemittel nicht in wäßrigen Lackformulierungen einsetzbar. Zudem mußten diese Bindemittel vor Applikation in lösemittelhaltigen Katalysatorformulierungen einer Reife unterzogen werden und dann innerhalb einer bestimmten Zeit verarbeitet werden.

Aufgabe der vorliegenden Erfindung war die Bereitstellung von lagerstabilen wäßrigen Suspensionen (Dispersionen bzw. Emulsionen) auf Basis dieser Carbosilane.

Es wurden nun gefunden, daß die vorgenannte Aufgabe mit Hilfe der erfindungsgemäßen Suspensionen (Emulsionen bzw. Dispersionen) gelöst werden können, wenn diese bestimmte Siloxane oder Silane, Emulgatoren und gegebenenfalls übliche Zusatzstoffe und Hilfsmittel in bestimmten Mengenverhältnissen in Wasser enthalten. Dies ist überraschend, da der Fachmann annehmen mußte, daß diese multifunktionellen Carbosilane oder Siloxane in Wasser über fortlaufende Hydrolyse- und Kondensationsreaktionen mit der Zeit unbrauchbar werden. Die erfindungsgemäßen Suspensionen weisen jedoch eine sehr hohe Lagerstabilität auf.

Der Begriff Suspensionen im Sinne der Erfindung umfaßt Emulsionen sowie Dispersionen.

Gegenstand der Erfindung sind daher Suspensionen, bestehend aus
a) 30 bis 95 Gew.-%, vorzugsweise 50 bis 80 Gew.-% Wasser,
b) 70 bis 5 Gew.-%, vorzugsweise 60 bis 30 Gew.-% mindestens eines mindestens 2 Reste der Formel (I)

   -(CH₂)ₘSiRₙX₃₋ₙ (I)

   mit
   - m =: bis 6, bevorzugt 2 oder 3,
   - n =: 0 bis 2
   - R =: C₁-C₁₈-Alkyl und/oder C₆-C₂₀-Aryl, bevorzugt C₁-C₈-Alkyl,
   und
   - X =: OH, C₁-C₄-Alkoxy, C₆-C₂₀-Aryloxy, C₁-C₆-Acyloxy und/oder Wasserstoff, bevorzugt OH, Methoxy oder Ethoxy,
   aufweisenden Silans oder Siloxans,
c) 0,1 bis 30 Gew.-%, vorzugsweise 0,5 bis 10 Gew.-% mindestens eines Emulgators und
d) 0 bis 20 Gew.-%, vorzugsweise 0 bis 2 Gew.-% Zusatzstoffe und/oder Hilfsmittel,
mit der Maßgabe, daß die Summe aus a) bis d) 100 Gew.-% ergibt.

In einer bevorzugten Ausführungsform der Erfindung ist das Silan, das mindestens 2 Reste der Formel I aufweist, eine Verbindung der Formel (II)

R₄₋ₚSi[Oₜ(CH₂)ₘSi R¹ ₙX₃₋ₙ]ₚ (II)

mit
- t =: 0 oder 1,
- p =: 4, 3 oder 2, bevorzugt 4,

- R¹ =: unsubstituierter C₁-C₁₈-Kohlenwasserstoff, vorzugsweise Methyl oder Ethyl, oder ein C₁-C₁₈-Kohlenwasserstoff, der mindestens O, N, S und/oder P enthält, vorzugsweise Methoxyethyl, wobei R¹ innerhalb des Moleküls gleich oder ungleich sein kann, und
andere Indizes weisen die vorgenannte Bedeutung auf

Diese Verbindungen der Formel II werden vorzugsweise hergestellt durch Hydrosilylierung der entsprechenden Vinyl-, Allyl- oder höheren Alkenylverbindungen mit H-Si-Gruppen tragenden entsprechend funktionalisierten Silanen oder Siloxanen mit Vinyl-, Allyl- oder höhere Alkenylgruppen tragenden, entsprechend funktionalisierten Silanen.

In weiteren Ausführungsformen der Erfindung enthält das Siloxan mindestens 2 Bausteine, ausgewählt aus M, D und T-Einheiten und gegebenenfalls zusätzlichen Q-Einheiten und/oder dessen Kondensations- und/oder Teilkondensationsprodukten.

Nach der dem Fachmann geläufigen Nomenklatur entspricht
M = R₃SiO_{1/2}, D = R₂SiO_{2/2}, T = RSiO_{3/2} und Q = SiO_{4/2} und R entspricht den vorgenannten Bedeutungen.

Das Siloxan weist dabei vorzugsweise ein Molekulargewicht (Zahlenmittel) von 308 bis 5 000 auf.

In einer weiteren bevorzugten Ausführungsform der Erfindung weist das Siloxan die Formel (III) 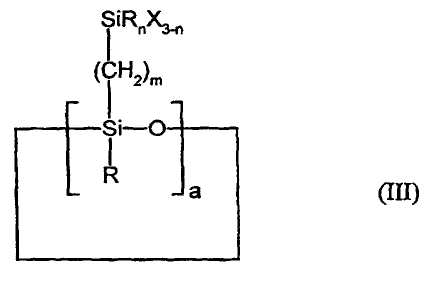 auf,
mit a = 3 bis 6, bevorzugt 4, oder entspricht dessen Kondensations- oder Teilkondensationsprodukten,
wobei alle weiteren Indizes n, m, X und R die zuvor aufgeführte Bedeutung haben.

Besonders bevorzugte Siloxane sind 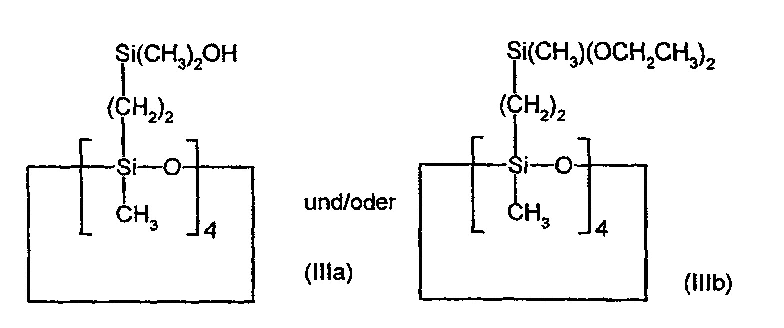 und/oder deren Kondensations- oder Teilkondensationsprodukte.

Die Verbindungen der Formel III (IIIa und IIIb) werden vorzugsweise nach den in DE-A 19 60 32 41 oder DE 19 71 16 50 beschriebenen Verfahren durch Hydrosilylierung der entsprechenden Vinylverbindung mit einem Chlorsilan und nachfolgender Hydrolyse bzw. Alkoholyse hergestellt.

Unter Kondensations- bzw. Teilkondensationsprodukte im Sinne der Erfindung werden solche Verbindungen verstanden, die z.B. durch Reaktion von 2 Resten der allgemeinen Formel (I) unter Abspaltung von Wasser oder Alkohol entstehen.

Emulgatoren c) im Sinne der Erfindung sind vorzugsweise anionische, kationische oder neutrale niedermolekulare, oligomere oder polymere Emulgatoren, Tenside oder Schutzkolloide.

Beispiele von anionischen niedermolekularen, oligomeren bzw. polymeren Emulgatoren oder Tensiden sind Alkali- oder Erdalkalisalze von Fettsäuren, z.B. Natriumsalze von gesättigten Fettsäuren mit 10 bis 21 Kohlenstoffatomen, Natriumsalze von ungesättigten Fettsäuren mit 12 bis 18 Kohlenstoffatomen, Alkylethersulfonate wie Ether von α-Sulfo-ω-hydroxy-polyethylenglykolen mit z.B. 1-Methylphenylethylphenol, Nonylphenol oder Alkylethern mit 12 bis 18 Kohlenstoffatomen, Arylalkylsulfonate wie beispielsweise mit geradkettigen oder verzweigten Butylgruppen versehene Naphthalinsulfonsäuren oder Alkylsulfate wie die Natriumsalze von langkettigen Schwefelsäurealkylestern.

Beispiele von kationischen niedermolekularen, oligomeren bzw. polymeren Emulgatoren oder Tensiden sind die Salze von langkettige Alkanreste tragenden Aminen mit 8 bis 22 Kohlenstoffatomen, die mit Säuren oder durch Alkylierung zu den Ammoniumverbindungen umgesetzt wurden, sowie analoge Phosphor- und Schwefelverbindungen.

Beispiele nichtionischer oligomerer bzw. polymerer Emulgatoren oder Tenside sind Alkylpolyglykolether oder -ester wie ethoxylierte gesättigte oder ungesättigte Bindungen tragende langkettige Alkohole z.B. mit 12 bis 18 Kohlenstoffatomen, ethoxyliertes Rizinusöl, ethoxylierte (Kokos)fettsäuren, ethoxyliertes Sojabohnenöl, ethoxylierte Resin- oder Rosinsäuren, ethoxylierter und gegebenenfalls propoxylierter Butyldiglykol, ethoxylierte Alkylarylether wie ethoxyliertes geradkettiges und/oder verzweigtes Nonylphenol oder Octylphenol oder benzyliertes p-Hydroxybiphenyl, ethoxylierte Tri- und Diglyceride und Alkylpolyglykoside.

Geeignet als Emulgatoren oder Tenside sind weiterhin ethoxylierte langkettige Alkyl- oder Alkenylamine, Lecithin, mit langkettigen Alkylisocyanaten modifizierte Umsetzungsprodukte aus Polyethylenglykolen und Diisocyanaten, Umsetzungsprodukte von Rapsöl- und Diethanolamin oder ethoxylierte Umsetzungsprodukte aus Sorbitan und langkettigen Alkan- oder Alkencarbonsäuren.

Geeignet sind zudem sogenannte Schutzkolloide, wie z.B. Polyvinylalkole oder wasserlösliche Cellulosederivate wie Methylcellulose.

Als Zusatzstoffe und Hilfsmittel d) kommen vorzugsweise Alterungsschutzmittel, Bakterizide, Fungizide, Gleitmittel, Verlaufshilfsmittel, Netz- und Dispergierhilfsmittel, Oxidationsschutzmittel, den pH stabilisierende Agentien wie Amine, z.B. Ethanolamin, Diethanolamin, Triethanolamin, Dibutylamin, Ammoniumacetat, Natrium- und Kaliumacetat, Lösungsmittel, z.B. Alkohole wie Methanol, Erthanol, n-Propanol, iso-Propanol und Butanol, Ketone wie Aceton und Butanon, Ester wie Butylacetat und Methoxypropylacetat, aromatische Lösemittel wie Toluol und Xylol, und aliphatische Lösemittel wie Hexan, Lackbenzin usw. in Betracht.

Gegenstand der Erfindung ist zudem ein Verfahren zur Herstellung der erfindungsgemäßen Suspension oder Suspension, wonach die Komponente b), c) und gegebenenfalls d) in Wasser (a) gegeben und anschließend emulgiert oder dispergiert werden.

Die Emulgierung oder Dispergierung der Komponenten a) bis d) erfolgt z.B. durch Einbringung von Energie durch z.B. Schütteln, Schlagen, Rühren, turbulentes Mischen, Einspritzen, Schwingungen und Kavitation in der Mischung, z.B. durch Ultraschall, mittels Kolloidmühlen, Homogenisatoren oder Strahldispergatoren. Vorzugsweise erfolgt die Herstellung der erfindungsgemäßen Zusammensetzung mehrstufig, indem Teile der Komponente a) und die Komponenten b) bis d) in einem Gefäß unter Rühren zusammengegeben werden, anschließend der Rest der Komponente a) zugefügt und die entstandene Suspension in einem Aggregat, das zum Einbringen hoher Energie geeignet ist, vorzugsweise mittels Homogenisatoren und Strahldispergatoren, nachbehandelt wird. Das Verfahren der Emulgierung ist dem Fachmann bekannt und wird beispielsweise in Römpp Chemie-Lexikon", Herausgeber, J. Falbe und M. Regitz, G. Thieme Verlag, Stuttgart, New York, Band 2, S. 1158f. beschrieben.

Ein weiterer Gegenstand der Erfindung ist die Verwendung der erfindungsgemäßen Suspension oder Suspension als Beschichtungs- und Imprägniermittel.

Die folgenden Beispiele erläutern die Erfindung, ohne dabei limitierend zu wirken.

### Ausführungsbeispiele

Die Teilchengröße wurde in allen Beispielen mittels Lichtstreuung ermittelt.

### Beispiel 1

In einem 2-1-Rührreaktor mit Ankerrührer wurden 242,4 g entionisiertes Wasser a) vorgelegt, auf 50°C erwärmt, eine auf 80°C erwärmte Mischung aus 34,33 g Polyoxyethylentriglycerid (Emulgator Atlas G-1300 der Firma ICI) c) und 15,67 g oxyethylierter Tridecylalkohol (Emulgator Renex 36 der Firma ICI) c) zugegeben und 15 Minuten bei einer Rührerdrehzahl von 1000/Minute gerührt. Die Mischung wurde auf 23°C gekühlt und 2,0 g Fungizid d) (Preventol D2 der Firma Bayer AG Deutschland) zugegeben. 1000,0 g einer Lösung aus 75 Gew.-% des Siloxans, einem Gemisch, bestehend zu ca. 50 Gew.-% aus der Verbindung der Formel (IIIa) und 50 Gew.-% dessen höheren Kondensaten b), und 25 % n-Butanol d) wurde unter Rühren in die Mischung eingetropft und 30 Minuten nachgerührt. Anschließend wurden 705,6 g Wasser zugetropft und weitere 30 Minuten nachgerührt. Die erhaltene Suspension wurde mit Hilfe eines Strahldispergators bei einem Gesamtdruck von 200 bar, mit einem Durchgang nachemulgiert. Man erhielt eine feinteilige, mehr als 6 Monate stabile Suspension mit einem Feststoffgehalt von 40,1 % und einer mittleren Teilchengröße von 0,37 µm.

### Beispiel 2

In einem 1-1-Rührreaktor mit Ankerrührer wurden 90,9 g entionisiertes Wasser a) vorgelegt, auf 50°C erwärmt, eine auf 80°C erwärmte Mischung aus 17,16 g Polyoxyethylentriglycerid (Emulgator Atlas G-1300 der Firma ICI) und 7,84 g oxylethylierter Tridecylalkohol (Emulgator Renex 36 der Firma ICI) c) zugegeben und 15 Minuten bei einer Rührerdrehzahl von 1000 U/Minute gerührt. Die Mischung wurde auf 23°C gekühlt und 1,0 g des Fungizids (Preventol D2, erhältlich bei der Firma Bayer AG Deutschland) d) und 5,0 g Diethanolamin d) zugegeben, 500,0 g Siloxan, einem Gemisch aus der Verbindung der Formel (IIb) im Gemisch mit dessen höheren Kondensaten b), wurde unter Rühren in die Mischung eingetropft und 30 Minuten nachgerührt. Anschließend wurden weitere 378,1 g Wasser zugetropft und weitere 30 Minuten nachgerührt. Die erhaltene Suspension wurde mit Hilfe eines Strahldispergators bei einem Gesamtdruck von 500 bar bei einem Durchgang nachemulgiert. Man erhielt eine feinteilige, mehr als 6 Monate stabile Suspension mit einem Feststoffgehalt von 53,1 % und einer mittleren Teilchengröße von 0,50 µm.

### Beispiel 3

In einem 1-1-Rührreaktor mit Ankerrührer wurden 116,3 g entionisiertes Wasser a) vorgelegt, auf 50°C erwärmt, eine auf 80°C erwärmte Mischung aus 20,9 g Polyoxyethylentriglycerid (Emulgator Atlas G-1300 der Firma ICI) und 4,10 g oxyethylierter Tridecylalkohol (Emulgator Renex 36 der Firme ICI) c) zugegeben und 15 Minuten bei einer Rührerdrehzahl von 1000 U/Minute gerührt. Die Mischung wurde auf 23°C gekühlt und 1,0 g des Fungizids (Preventol D2, erhältlich bei der Firma Bayer AG Deutschland) d) und 5,0 g Diethanolamin d) zugegeben, 500,0 g 1,3,5,7-Tetramethyl-1,3,5,7-(methoxydimethylsilylethyl)cyclotetrasiloxan im Gemisch mit dessen höheren Kondensaten b), wurde unter Rühren in die Mischung eingetropft und 30 Minuten nachgerührt. Anschließend wurden weitere 352,7 g Wasser a) zugetropft und weitere 30 Minuten nachgerührt. Die erhaltene Suspension wurde mit Hilfe eines Strahldispergators bei einem Gesamtdruck von 500 bar bei einem Durchgang nachemulgiert. Man erhielt eine feinteilige, mehr als 6 Monate stabile Suspension mit einem Feststoffgehalt von 52,6 % und einer mittleren Teilchengröße von 1,60 µm.

## Patentansprüche

1. Suspension, bestehend aus
a) 30 bis 95 Gew.-% Wasser,
b) 70 bis 5 Gew.-% mindestens eines mindestens 2 Reste der Formel (I)
-(CH₂)ₘSiRₙX₃₋ₙ (I)
mit
m = bis 6, bevorzugt 2 oder 3,
n = 0 bis 2
R = C₁-C₁₈-Alkyl und/oder C₆-C₂₀-Aryl, bevorzugt C₁-C₈-Alkyl,
und
X= OH, C₁-C₄-Alkoxy, C₆-C₂₀-Aryloxy, C₁-C₆-Acyloxy und/oder Wasserstoff, bevorzugt OH, Methoxy oder Ethoxy,
aufweisenden Silans oder Siloxans,
c) 0,1 bis 30 Gew.-% mindestens eines Emulgators und
d) 0 bis 20 Gew.-% Zusatzstoffe und/oder Hilfsmittel,
mit der Maßgabe, daß die Summe aus a) bis d) 100 Gew.-% ergibt.

2. Suspension nach Anspruch 1, **dadurch gekennzeichnet, daß** das Silan eine Verbindung der Formel (II)
R₄₋ₚSi[Oₜ(CH₂)ₘSi R¹ ₙX₃₋ₙ]ₚ (II)
ist,
mit
t = 0 oder 1,
p = 4, 3 oder 2,
m = 1 bis 6,
n = 0 bis 2,
R = C₁-C₁₈-Alkyl und/oder C₆-C₂₀-Aryl,
R¹ = unsubstituierter C₁-C₁₈-Kohlenwasserstoff oder einen C₁-C₁₈-Kohlenwasserstoff, der mindestens O, N, S und/oder P enthält, wobei R¹ innerhalb des Moleküls gleich oder ungleich sein kann, und
X = OH, C₁-C₄-Alkoxy, C₆-C₂₀-Aryloxy, C₁-C₆-Acyloxy und/oder Wasserstoff.

3. Suspension nach Anspruch 1, **dadurch gekennzeichnet, daß** das Siloxan mindestens 2 Bausteine, ausgewählt aus M, D und T-Einheiten und gegebenenfalls zusätzlichen Q-Einheiten und/oder dessen Kondensations- oder Teilkondensationsprodukten enthält.

4. Suspension nach Anspruch 3, **dadurch gekennzeichnet, daß** das Siloxan ein Molekulargewicht zwischen 308 bis 5 000 aufweist.

5. Suspension nach einem oder mehreren der Ansprüche 1, 3 oder 4, **dadurch gekennzeichnet, daß** das Siloxan die Formel (III) 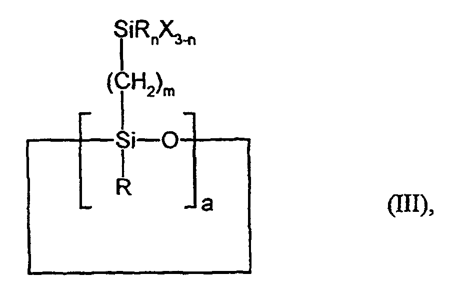 aufweist,
mit a = 3 bis 6 n = 0 bis 2, m = 1 bis 6, R = C₁-C₁₈-Alkyl und/oder C₆-C₂₀-Aryl, X = OH, C₁-C₄-Alkoxy, C₆-C₂₀-Aryloxy und/oder C₁-C₆-Aryloxy oder dessen Kondensations- oder Teilkondensationsprodukten.

6. Verfahren zur Herstellung einer Suspension nach einem oder mehreren der Ansprüche 1 bis 6, **dadurch gekennzeichnet, daß** die Komponente b), c) und gegebenenfalls d) in Wasser (a) gegeben und anschließend emulgiert oder dispergiert werden.

7. Verwendung der Suspension nach den Ansprüchen 1 bis 5 als Beschichtungsund Imprägniermittel.

## Claims

1. Suspension composed of
a) 30 to 95% by weight of water,
b) 70 to 5% by weight of at least one silane or siloxane containing at least 2 radicals of the formula (I)
-(CH₂)ₘSiRₙX₃₋ₙ (I)
where
m = up to 6, preferably 2 or 3,
n= 0 to 2,
R = C₁-C₁₈ alkyl and/or C₆-C₂₀ aryl, preferably C₁-C₈ alkyl,
and
X = OH, C₁-C₄ alkoxy, C₆-C₂₀ aryloxy, C₁-C₆ acyloxy and/or hydrogen, preferably OH, methoxy or ethoxy,
c) 0.1 to 30% by weight of at least one emulsifier and
d) 0 to 20% by weight of additives and/or auxiliaries, with the proviso that the sum of a) to d) is 100% by weight.

2. Suspension according to Claim 1, **characterized in that** the silane is a compound of the formula (II)
R₄₋ₚSi[Oₜ(CH₂)ₘSiR¹ ₙX₃₋ₙ]ₚ (II)
where
t = 0 or 1,
p = 4, 3 or 2,
m = 1 to 6,
n = 0 to 2,
R = C₁-C₁₈ alkyl and/or C₆-C₂₀ aryl,
R¹ = unsubstituted C₁-C₁₈ hydrocarbon or a C₁-C₁₈ hydrocarbon containing at least O, N, S and/or P, it being possible for R¹ to be identical or different within the molecule, and
X = OH, C₁-C₄ alkoxy, C₆-C₂₀ aryloxy, C₁-C₆ acyloxy and/or hydrogen.

3. Suspension according to Claim 1, **characterized in that** the siloxane contains at least 2 structural units selected from M, D and T units and if desired additional Q units and/or condensation products or partial condensation products thereof.

4. Suspension according to Claim 3, **characterized in that** the siloxane has a molecular weight between 308 to 5000.

5. Suspension according to one or more of Claims 1, 3 or 4, **characterized in that** the siloxane has the formula (III) 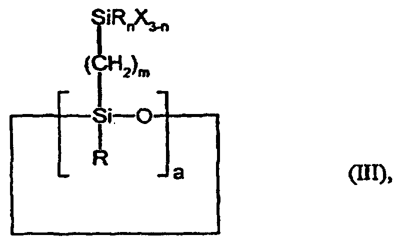 where a = 3 to 6, n = 0 to 2, m = 1 to 6, R = C₁-C₁₈ alkyl and/or C₆-C₂₀ aryl, X = OH, C₁-C₄ alkoxy, C₆-C₂₀ aryloxy and/or C₁-C₆ acyloxy or the condensation products or partial condensation products thereof.

6. Process for preparing a suspension according to one or more of Claims 1 to 6, **characterized in that** components b), c) and optionally d) are added to water (a) and subsequently emulsified or dispersed.

7. Use of the suspension according to Claims 1 to 5 as a coating and impregnating composition.

## Revendications

1. Suspension composée de
a) 30 à 95% en poids d'eau,
b) 70 à 5% en poids d'au moins un silane ou un siloxane présentant au moins 2 radicaux de formule (I)
-(CH₂)ₘSiRₙX₃₋ₙ (I)
avec
m = jusqu'à 6, de préférence 2 ou 3,
n = 0 à 2
R = un radical alkyle C₁-C₁₈ et/ou aryle C₆-C₂₀, de préférence alkyle C₁-C₈ et
X = un radical OH, alcoxy C₁-C₄, aryloxy C₆-C₂₀, acyloxy C₁-C₆ et/ou de l'hydrogène, de préférence un radical OH, méthoxy ou éthoxy,
c) 0,1 à 30% en poids d'au moins un émulsifiant et
d) 0 à 20% en poids d'additifs et/ou adjuvants,
avec la condition que la somme de a) à d) fasse 100% en poids.

2. Suspension selon la revendication 1, **caractérisée en ce que** le silane est un composé de formule (II)
R₄₋ₚSi[Oₜ(CH₂)ₘSiR¹ ₙX₃₋ₙ]ₚ (II)
Avec
t = 0 ou 1,
p = 4, 3 ou 2,
m = 1 à 6
n = 0 à 2,
R = un radical alkyle C₁-C₁₈ et/ou aryle C₆-C₂₀,
R¹ = un hydrocarbure C₁-C₁₈ non substitué ou un hydrocarbure C₁-C₁₈ qui contient au moins O, N, S et/ou P, R¹ dans la molécule pouvant être identique ou différent et
X = un radical OH, alcoxy C₁-C₄, aryloxy C₆-C₂₀, acyloxy C₁-C₆ et/ou de l'hydrogène.

3. Suspension selon la revendication 1, **caractérisée en ce que** le siloxane contient au moins 2 composants sélectionnés parmi les unités M, D et T et, éventuellement, des unités Q supplémentaires et/ou leurs produits de condensation ou de condensation partielle.

4. Suspension selon la revendication 3, **caractérisée en ce que** le siloxane présente un poids moléculaire entre 308 et 5000.

5. Suspension selon l'une ou plusieurs des revendications 1, 3 ou 4, **caractérisée en ce que** le siloxane répond à la formule (III) 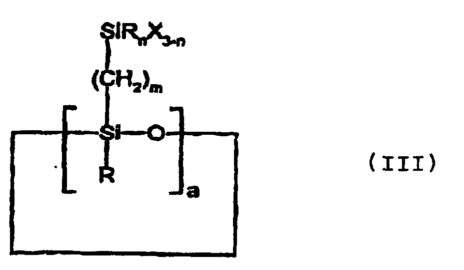 avec a = 3 à 6, n = 0 à 2, m = 1 à 6, R = un radical alkyle C₁-C₁₈ et/ou aryle C₆-C₂₀, X = OH, un radical alcoxy C₁-C₄, aryloxy C₆-C₂₀ et/ou aryloxy C₁-C₆ ou leurs produits de condensation ou de condensation partielle.

6. Procédé de préparation d'une suspension selon l'une ou plusieurs des revendications 1 à 6, **caractérisé en ce que** les composants b), c) et éventuellement d) sont versés dans l'eau (a) et ensuite émulsionnés ou dispersés.

7. Utilisation de la suspension selon les revendications 1 à 5 comme produit d'enduction et d'imprégnation.
